# NEUE EUROPÄISCHE PATENTSCHRIFT

(11) **EP 1 521 929 B2**
(45) Veröffentlichungstag und Bekanntmachung des Hinweises auf die Entscheidung über den Einspruch: **22.01.2020**
(45) Hinweis auf die Patenterteilung: 24.10.2012
(21) Anmeldenummer: 03763597.6
(22) Anmeldetag: 08.07.2003
(51) Int. Cl.: F16J 1/16

(54) **KOLBEN FÜR EINEN VERBRENNUNGSMOTOR**
PISTON FOR AN INTERNAL COMBUSTION ENGINE
PISTON POUR MOTEUR A COMBUSTION

(30) Priorität: 11.07.2002 DE 10231233
(43) Veröffentlichungstag der Anmeldung: 13.04.2005
(73) Patentinhaber: MAHLE GMBH, 70376 Stuttgart (DE)
(72) Erfinder: ZVONKOVIC, Josip, 71384 Weinstadt (DE)
(74) Vertreter: BRP Renaud & Partner mbB Rechtsanwälte Patentanwälte Steuerberater
(86) Internationale Anmeldenummer: PCT/DE2003/002289
(87) Internationale Veröffentlichungsnummer: WO 2004/008006

(56) Entgegenhaltungen:
- WO-A1-03/098078
- DE-A- 2 152 462
- DE-A- 3 036 062
- DE-A- 4 431 990
- DE-A- 4 441 450
- DE-A1- 4 111 368
- DE-C- 670 802

## Beschreibung

Die Erfindung betrifft einen Kolben für einen Verbrennungsmotor nach den Oberbegriffen der unabhängigen Ansprüche 1 und 3.

Ein Kolben mit Nabenbohrungen, entsprechend den Merkmalen des Oberbegriffes der unabhangigen Ansprüche 1 und 3, die jeweils in einen inneren, einen mittleren und einen äußeren Bereich unterteilt sind, ist aus der DE-OS 44 31 990 bekannt. Um bei einer durch eine hohe Belastung des Kolbens, d.h. durch einen hohen Zünddruck und durch einen großen Wärmeeinfall verursachten Verformung des Kolbens insb. in den Nabenbereichen zu vermeiden, dass sich bei einem kurzen und starren Kolbenbolzen Reibkontakte zwischen dem Bolzen und der Nabenbohrung ergeben, sind sowohl die inneren als auch die äußeren Bereiche der jeweiligen Nabenbohrungen des bekannten Kolbens als Formbohrungen ausgebildet. Unter einer hohen Gasdruck- und Wärmebelastung stehende Kolben erfahren aber insb. bei kurzer Kolbenbolzenlänge, d.h. bei einem Verhältnis von Kolbenbolzenlänge zu Kolbendurchmesser von weniger als 0,7 eine Verformung, bei der sich der Randbereich des Kolbenbodens in Bolzenrichtung, d.h. bezogen auf die Kolbenbodenmitte, nach unten biegt. Dies bewirkt, dass auf den Zenit der äußeren Bereiche der Nabenbohrungen derartige Kräfte einwirken, dass dort die Innenwände der Nabenbohrungen mit der Mantelfläche des Kolbenbolzens in Reibkontakt kommen, was zu Beschädigungen sowohl der Innenwände der Nabenbohrungen als auch der Mantelfläche des Kolbenbolzens führen kann.

Hiervon ausgehend liegt der Erfindung das Problem zugrunde, auch bei einer höheren Belastung des Kolbens Nabenreibung zu vermeiden.

Die Lösung dieses Problems wird erreicht mit den Merkmalen nach dem Kennzeichen der Ansprüche 1 und 3.

Zweckmäßige Ausgestaltungen der Erfindung sind Gegenstand der Unteransprüche.

Nabenbohrungen gemäß der Erfindung mit im Querschnitt einseitig oder zweiseitig oval geformten äußeren Bereichen, wobei die große Achse der Ovalität parallel zur Kolbenachse liegt, haben den Vorteil, dass der Zenit der äußeren Bereiche der Nabenbohrungen die Mantelfläche des Kolbenbolzens nicht berührt, sodass sich hier keine Nabenreibung ergeben kann und zudem immer ein ausreichendes Ölreservoir zwischen Nabenbohrungszenit und der Mantelfläche des Kolbenbolzen bestehen bleibt, wodurch auch bei einer höheren Belastung des Kolbens eine gute Schmierung des Kolbenbolzens gewährleistet ist.

Die Erfindung wird anhand eines bevorzugten in den Zeichnungen dargestellten Ausführungsbeispiels näher erläutert. Es zeigen
- Fig. 1: einen Kolben im Schnitt mit Nabenbohrungen gemäß der Erfindung,
- Fig. 2: eine vergrößerte Darstellung des Zenits der linken Nabenbohrung im Teilschnitt,
- Fig. 3: einen Querschnitt durch den äußeren Abschnitt einer der Nabenbohrungen entlang der Linie III-III in Fig. 1 und
- Fig. 4: einen Querschnitt durch den äußeren Abschnitt einer weiteren Ausgestaltung der Nabenbohrungen.

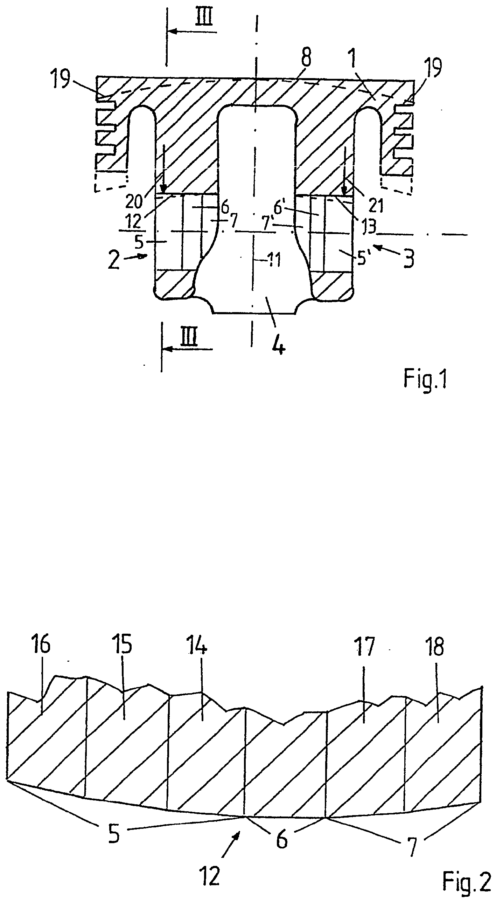

Ein in Fig. 1 im Schnitt dargestellter Kolben 1 ist als Tauchkolben ausgebildet, bei dem die Länge des Kolbenbolzens weniger als 70% des Durchmessers des Zylinders beträgt. Insbesondere handelt es sich hierbei um einen hochbelastbaren Stahlkolben, wie er in Dieselmotoren Verwendung findet. Der Schnitt durch den Kolben ist so gewählt, dass beide Nabenbohrungen 2 und 3 zu sehen sind, der Kolbenschaft 4 aber nur in Draufsicht dargestellt ist.

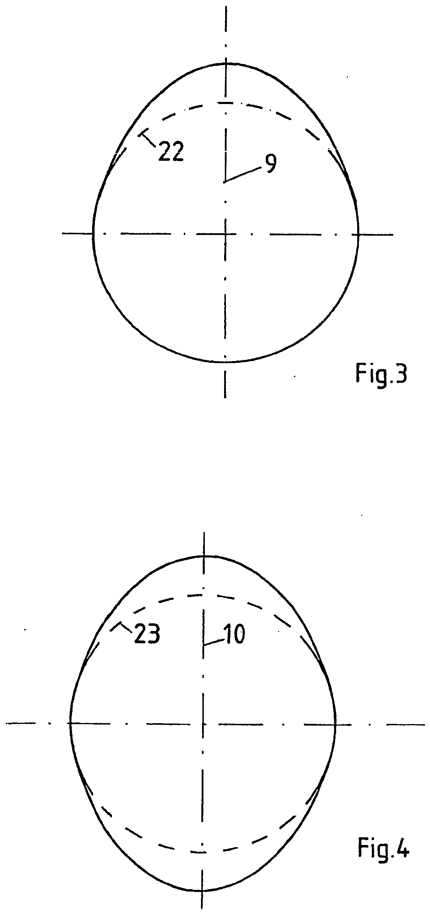

Die beiden Nabenbohrungen 2, 3 weisen je einen äußeren 5, 5', einen mittleren 6, 6' und einen inneren Bereich 7, 7' auf. Der innere Bereich 7, 7' ist als Formbohrung ausgebildet, die sich vom Kolbeninneren nach außen hin konisch verjüngt. Der mittlere Bereich 6, 6' ist kreiszylindrisch ausgebildet. Der äußere Bereich 5, 5' weist einen Querschnitt mit einer einseitig in Richtung des Kolbenbodens 8 ovalen Querschnittsform gemäß Fig. 3, einem Schnitt entlang der Linie III-III in Fig. 1, auf. Möglich ist hierbei auch ein Querschnitt des Bereiches 5, 5' mit einer beidseitig ovalen Querschnittsform gemäß Fig. 4. In beiden Fällen liegt die große Achse der Ovalität 9 bzw. 10 parallel zur Kolbenachse 11. Mit gestrichelten Linien 22, 23 ist in den Fig. 3 und 4 ein in den Nabenbohrungen lagernder Kolbenbolzen andeutungsweise dargestellt.

Anhand des in Fig. 2 dargestellten Querschnitts des Zenits 12 der linken Nabenbohrung 2, dessen Spiegelbild der Form des Zenits 13 der rechten Nabenbohrung 3 entspricht, ergibt sich die exakte Form der Nabenbohrungen 2 und 3. Der Zenit des äußeren Bereiches 5 ist im vorliegenden Ausführungsbeispiel in drei Abschnitte 14, 15, 16 unterteilt mit einer zum Kolbenäußeren hin zunehmenden Steigung der Strecken des die drei Abschnitte 14, 15, 16 begrenzenden Polygonzuges, woraus ersichtlich ist, dass die Ovalität des Querschnitts gemäß Fig. 3 des äußeren Bereiches 5 der Nabenbohrungen 2, 3 vom Kolbeninneren nach außen hin zunimmt.

Dem äußeren Bereich 5 schließen sich der kreiszylindrisch ausgebildete mittlere Bereich 6 und der innere Bereich 7 an, welcher innere als Formbohrung ausgebildete Bereich 7 einen kreisförmigen Querschnitt hat, dessen Radiuszunahme sich aus der zunehmenden Steigung der beiden Abschnitte 17 und 18 des Zenits des inneren Bereiches 7 ergibt.

Der Kolben 1 gemäß Fig. 1 ist so konstruiert, dass nur ein kurzer Bolzen erforderlich ist, der sich auch bei größerem Gasdruck kaum verbiegt. Der Kolben 1 erfährt bei einem größeren Gasdruck aber eine Verformung, die mittels der punktierten Linie 19 übertrieben dargestellt ist. Dies bewirkt, dass große Kräfte in Richtung der Pfeile 20 und 21 auf die Nabenbohrungen 2 und 3 einwirken, die eine Verformung des Zenits dieser Bohrungen 2, 3 in einer vom Kolbenboden 8 wegweisenden Richtung bewirken. Dadurch, dass in diesem Bereich 5, 5' die Nabenbohrungen 2, 3 eine gemäß Fig. 3 nach oben gerichtete Ovalität aufweisen und der in Fig. 1 nicht eingezeichnete Kolbenbolzen eine kreiszylindrische Form hat, bewirken die Kräfte in Richtung der Pfeile 20 und 21 lediglich, dass die Ovalität der Nabenbohrungen 2, 3 in Richtung Kreisform und damit der Abstand des Zenits der Nabenbohrungen 2, 3 von der Oberfläche des Kolbenbolzens im Bereich 5, 5' ein wenig abnehmen. Eine Restovalität der Nabenbohrungen 2, 3 im Bereich 5, 5' bleibt hierbei aber immer erhalten, wodurch zum einen vermieden wird, dass der Zenit der Nabenbohrungen 2, 3 im Bereich 5, 5' in Kontakt mit der Oberfläche des Kolbenbolzens kommt und der Kolbenbolzen durch Reibung an den Innenwänden der Nabenbohrungen 2, 3 unter Einfluss der Kräfte in Richtung der Pfeile 20, 21 beschädigt wird bzw. der Kolbenbolzen die Nabenbohrungen 2, 3 beschädigt. Zum anderen bleibt hierdurch ein Ölreservoir im Bereich 5, 5' zwischen Kolbenbolzen und Zenit der Nabenbohrungen 2, 3 erhalten, wodurch eine gute Schmierung des Kolbenbolzens auch unter erhöhtem Gasdruck gewährleistet bleibt.

### Bezugszeichenliste

- 1: Kolben
- 2: Nabenbohrung
- 3: Nabenbohrung
- 4: Kolbenschaft
- 5: äußerer Bereich von 2, 3
- 6: mittlerer Bereich von 2, 3
- 7: innerer Bereich von 2, 3
- 8: Kolbenboden
- 9: große Achse der Ovalität
- 10: große Achse der Ovalität
- 11: Kolbenachse
- 12: Zenit von 2
- 13: Zenit von 3
- 14: Abschnitt von 5
- 15: Abschnitt von 5
- 16: Abschnitt von 5
- 17: Abschnitt von 7
- 18: Abschnitt von 7
- 19: punktierte Linie
- 20: Pfeil
- 21: Pfeil
- 22: gestrichelte Linie
- 23: gestrichelte Linie

## Patentansprüche

1. Kolben (1) für einen Verbrennungsmotor
mit einem Kolbenbolzen, dessen Länge weniger als 70% des Durchmessers eines den Kolben aufnehmenden Zylinders des Verbrennungsmotors beträgt, und mit einem Kolbenboden (8)
und
mit zwei auf der dem Kolbenboden (8) abgewandten Seite des Kolbens (1) angeordneten und voneinander beabstandeten Kolbenbolzennaben,
die je eine Nabenbohrung (2,3) mit jeweils
einem inneren (7,7')
einem mittleren (6,6') und
einem äußeren Bereich (5,5') aufweisen,
wobei der innere Bereich (7,7') als konisch ausgebildete Formbohrung und der mittlere Bereich (6,6') kreiszylindrisch ausgebildet sind,
wobei der äußere Bereich (5,5') einen Querschnitt mit einer einseitig in Richtung des Kolbenbodens (8) ovalen Querschnittsform aufweist,
wobei die große Achse der Ovalität zumindest näherungsweise parallel zur Kolbenachse (11) liegt, und
wobei der Grad der Ovalität von der Grenze zum mittleren Bereich (6,6') bis zum äußeren Ende der Nabenbohrung (2,3) zunimmt.

2. Kolben nach Anspruch 1, **dadurch gekennzeichnet, dass** der Grad der Ovalität des äußeren Bereiches (5,5') in mehreren Abschnitten (14,15,16) zunimmt, wobei sich jeder Abschnitt (15,16) an den vorhergehenden (14,15) stufenlos anschließt.

3. Kolben (1) für einen Verbrennungsmotor
mit einem Kolbenbolzen, dessen Länge weniger als 70% des Durchmessers eines den Kolben aufnehmenden Zylinders des Verbrennungsmotors beträgt, und mit einem Kolbenboden (8)
und mit zwei auf der dem Kolbenboden (8) abgewandten Seite des Kolbens (1) angeordneten und voneinander beabstandeten Kolbenbolzennaben,
die je eine Nabenbohrung (2,3) mit jeweils
einem inneren (7,7')
einem mittleren (6,6') und
einem äußeren Bereich (5,5') aufweisen,
wobei der innere Bereich (7,7') als konisch ausgebildete Formbohrung und der mittlere Bereich (6,6') kreiszylindrisch ausgebildet sind,
wobei der äußere Bereich (5,5') einen Querschnitt mit einer sowohl in Richtung des Kolbenbodens (8) als auch in der dazu entgegengesetzten Richtung ovalen Querschnittsform aufweist,
wobei die große Achse der Ovalität zumindest näherungsweise parallel zur Kolbenachse (11) liegt, und
wobei der Grad der Ovalität von der Grenze zum mittleren Bereich (6,6') bis zum äußeren Ende der Nabenbohrung (2,3) zunimmt.

## Claims

1. Piston (1) for an internal combustion engine, having a gudgeon pin, of which the length is less than 70% of the diameter of a piston-accommodating cylinder of the internal combustion engine, and having a piston crown (8),
and
having two spaced-apart gudgeon-pin bosses, which are arranged on that side of the piston (1) which is directed away from the piston crown (8) and
each have a boss hole (2, 3) with in each case
an inner region (7, 7'),
a central region (6, 6')
and
an outer region (5, 5'),
wherein the inner region (7, 7') is designed in the form of a conically shaped hole and the central region (6, 6') is of circular-cylindrical design,
wherein the outer region (5, 5') has a cross section with a cross-sectional shape which is oval on one side in the direction of the piston crown (8),
wherein the major axis of the ovality is located at least more or less parallel to the piston axis (11), and
wherein the degree of ovality increases from the boundary with the central region (6, 6') to the outer end of the boss hole (2, 3).

2. Piston according to Claim 1, **characterized in that** the degree of ovality of the outer region (5, 5') increases over a plurality of portions (14, 15, 16), wherein each portion (15, 16) adjoins the preceding one (14, 15) in a stepless manner.

3. Piston (1) for an internal combustion engine, having a gudgeon pin, of which the length is less than 70% of the diameter of a piston-accommodating cylinder of the internal combustion engine, and having a piston crown (8),
and having two spaced-apart gudgeon-pin bosses, which are arranged on that side of the piston (1) which is directed away from the piston crown (8) and
each have a boss hole (2, 3) with in each case an inner region (7, 7'),
a central region (6, 6') and
an outer region (5, 5'),
wherein the inner region (7, 7') is designed in the form of a conically shaped hole and the central region (6, 6') is of circular-cylindrical design,
wherein the outer region (5, 5') has a cross section with a cross-sectional shape which is oval both in the direction of the piston crown (8) and in the direction counter to this,
wherein the major axis of the ovality is located at least more or less parallel to the piston axis (11), and
wherein the degree of ovality increases from the boundary with the central region (6, 6') to the outer end of the boss hole (2, 3).

## Revendications

1. Piston (1) pour un moteur à combustion,
comprenant un tourillon de piston dont la longueur est inférieure à 70 % du diamètre d'un cylindre du moteur à combustion qui accueille le piston, et comprenant un fond de piston (8)
et
comprenant deux moyeux de tourillon de piston disposés sur le côté du piston (1) à l'opposé du fond de piston (8) et espacés l'un de l'autre,
lesquels possèdent chacun un perçage de moyeu (2, 3) comprenant respectivement
une zone intérieure (7, 7'),
une zone centrale (6, 6') et
une zone extérieure (5, 5'),
la zone intérieure (7, 7') étant réalisée sous la forme d'un perçage profilé de configuration conique et la zone centrale (6, 6') étant réalisée de manière cylindrique circulaire,
la zone extérieure (5, 5') possédant une section transversale ayant une forme de section transversale ovale unilatéralement en direction du fond de piston (8),
le grand axe de l'ovalité étant au moins approximativement parallèle à l'axe du piston (11) et
le degré de l'ovalité augmentant à partir de la limite avec la zone centrale (6, 6') jusqu'à l'extrémité extérieure du perçage de moyeu (2, 3).

2. Piston selon la revendication 1, **caractérisé en ce que** le degré d'ovalité de la zone extérieure (5, 5') augmente dans plusieurs portions (14, 15, 16), chaque portion (15, 16) se rattachant de manière progressive à la précédente (14, 15).

3. Piston (1) pour un moteur à combustion,
comprenant un tourillon de piston dont la longueur est inférieure à 70 % du diamètre d'un cylindre du moteur à combustion qui accueille le piston, et comprenant un fond de piston (8)
et comprenant deux moyeux de tourillon de piston disposés sur le côté du piston (1) à l'opposé du fond de piston (8) et espacés l'un de l'autre,
lesquels possèdent chacun un perçage de moyeu (2, 3) comprenant respectivement
une zone intérieure (7, 7'),
une zone centrale (6, 6') et
une zone extérieure (5, 5'),
la zone intérieure (7, 7') étant réalisée sous la forme d'un perçage profilé de configuration conique et la zone centrale (6, 6') étant réalisée de manière cylindrique circulaire,
la zone extérieure (5, 5') possédant une section transversale ayant une forme de section transversale ovale à la fois en direction du fond de piston (8) et aussi dans la direction opposée à celle-ci,
le grand axe de l'ovalité étant au moins approximativement parallèle à l'axe du piston (11) et
le degré de l'ovalité augmentant à partir de la limite avec la zone centrale (6, 6') jusqu'à l'extrémité extérieure du perçage de moyeu (2, 3).
